# EUROPÄISCHE PATENTANMELDUNG

(11) **EP 4 613 429 A1**
(43) Veröffentlichungstag der Anmeldung: **10.09.2025**
(21) Anmeldenummer: 25161164.6
(22) Anmeldetag: 28.02.2025
(51) Int. Cl.: B25B 31/00

(54) **WERKZEUG ZUR FIXIERUNG EINES GEGENSTANDES AN EINER DIESEN TRAGENDEN ANORDNUNG UNTER VERWENDUNG EINER AUF EINE PROFILSCHIENE AUFZUSETZENDEN UND MIT DIESER VERRASTENDEN KLEMME**

(30) Priorität: 04.03.2024 DE 202024101036 U
(71) Anmelder: Premium Mounting Technologies GmbH & Co. KG, 95346 Stadtsteinach (DE)
(72) Erfinder: Heineke, Kai, 95326 Kulmbach (DE)
(74) Vertreter: Jannig & Repkow Patentanwälte PartG mbB

(57) **Zusammenfassung**

Es wird ein Werkzeug zur Fixierung eines Gegenstandes an einer diesen tragenden Anordnung unter Verwendung einer auf einen bestimmten Profilschienenabschnitt aufzusetzenden und dabei mit diesem verrastenden Klemme beschrieben. Das beschriebene Werkzeug zeichnet sich dadurch aus, dass es
- eine Verbindungsvorrichtung, mittels welcher das Werkzeug während dessen Benutzung an der Profilschiene fixierbar ist, und
- eine Klemmenbewegungsvorrichtung, durch welche die Klemme auf den bestimmten Profilschienenabschnitt drückbar ist, aufweist.

## Beschreibung

Die vorliegende Erfindung betrifft ein Werkzeug gemäß dem Oberbegriff des Patentanspruchs 1, also ein Werkzeug zur Fixierung eines Gegenstandes an einer diesen tragenden Anordnung unter Verwendung einer auf einen bestimmten Profilschienenabschnitt aufzuschiebenden und dabei mit diesem verrastenden Klemme.

Der durch das Werkzeug zu fixierende Gegenstand kann beispielsweise ein Photovoltaikmodul sein.

Ein Photovoltaikmodul ist eine Vorrichtung, welche das Licht der Sonne direkt in elektrische Energie umwandelt. Photovoltaikmodule werden im Allgemeinen durch gerahmte quaderförmige Platten gebildet, die häufig unter Verwendung von die Photovoltaikmodule tragenden Montagesystemen auf Dächern von Gebäuden angeordnet sind.

Ein bekanntes Montagesystem zur Montage von Photovoltaikmodulen auf Dächern ist beispielsweise in der DE 20 2020 104 452 U1 beschrieben. Bei diesem Montagesystem werden die Photovoltaikmodule von Profilschienen getragen und durch Klemmen an den Profilschienen fixiert.

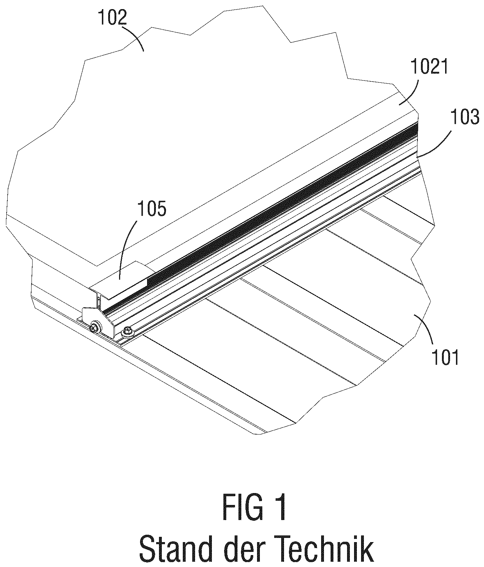

Dieses Montagesystem wird der Vollständigkeit halber anhand der Figuren 1 bis 3 kurz erläutert.

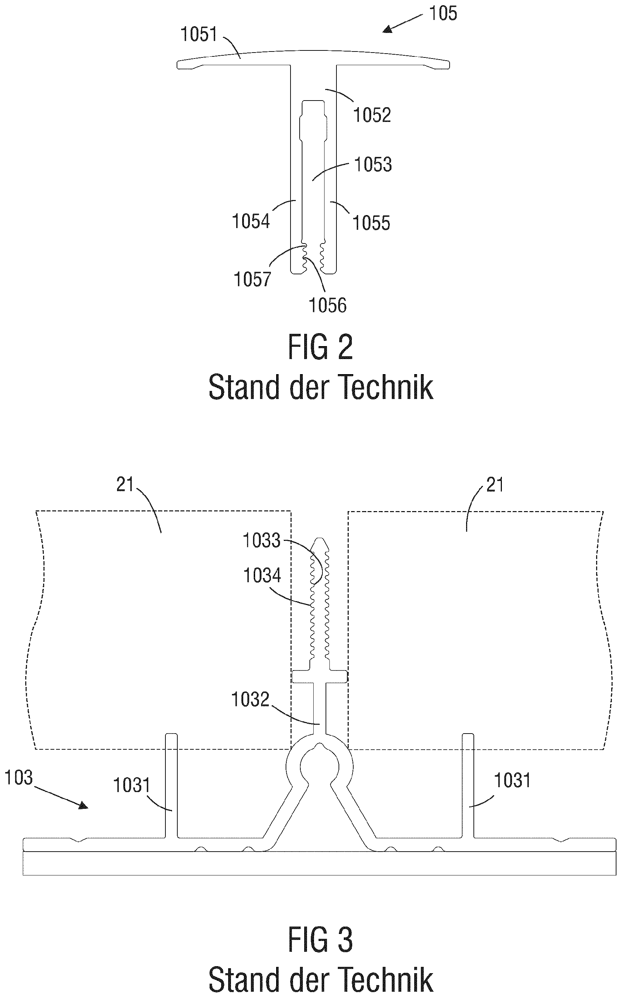

Die Figur 1 veranschaulicht, wie beim herkömmlichen Montagesystem ein einen umlaufenden Rahmen 1021 aufweisendes Photovoltaikmodul 102 unter Verwendung einer Klemme 105 an einer Profilschiene 103 fixiert ist. Die Figuren 2 und 3 veranschaulichen, wie zwei Photovoltaikmodule 102 unter Verwendung einer (einzigen) Klemme 105 an einer Profilschiene 103 fixierbar sind. Durch eine einzige Klemme 102 können bis zu vier Photovoltaikmodule 102 an einer Profilschiene 103 fixiert werden, wobei aber jedes Photovoltaikmodul 102 durch mehrere Klemmen an mehreren Profilschienen 103 fixiert ist.

Die Profilschiene 103 ist bei der in der Figur 1 gezeugten Anordnung direkt auf einem Dach 101 montiert.

Wie insbesondere aus der Figur 3 ersichtlich ist, weist die Profilschiene 103 die Photovoltaikmodule 102 tragende Auflagen 1031 und einen vertikalen Verbindungssteg 1032, der zum Aufsetzen einer das Photovoltaikmodul 103 nach unten gegen die Auflage 1031 drückenden Klemme 105 ausgelegt ist, auf. Der vertikale Verbindungssteg 1032 weist im oberen Bereich mehrere parallel übereinander angeordnete und in Längsrichtung der Profilschiene 103 verlaufende Nuten 1033 auf. Dadurch weisen die einander gegenüberliegenden Seitenflächen des Steges 1032 im Ergebnis jeweils eine wellenförmige Oberfläche auf. Die von oben nach unten abwechselnd aufeinanderfolgenden Vertiefungen (Nuten 1033) und die zwischen benachbarten Nuten verbliebenen Erhebungen 1034 bilden Rastvertiefungen und Rasterhebungen und ermöglichen im Zusammenwirken mit an der Klemme 105 vorgesehenen komplementären Rasterhebungen und Rastvertiefungen das Zustandekommen einer Rastverbindung zwischen dem Verbindungssteg 1032 und einer darauf aufgesetzten Klemme 105.

Die in der Figur 2 allein dargestellte Klemme 105 ist dazu ausgelegt, auf die Profilschiene 103, genauer gesagt von oben auf den Verbindungssteg 1032 derselben aufgesteckt zu werden und einhergehend damit ein oder mehrere Photovoltaikmodule 102 nach unten gegen die Profilschiene, genauer gesagt auf die Auflagen 1031 derselben zu drücken. Die Photovoltaikmodule 102 werden dabei zwischen den Profilschienen 103 und den Klemmen 105 eingeklemmt und dadurch in ihrer bestimmungsgemäßen Lage an den sie tragenden Profilschienen fixiert.

Wie insbesondere aus der Figur 2 ersichtlich ist, weist die Klemme 105 einen T-förmigen Querschnitt auf, umfassend einen horizontalen Schenkel 1051 und einen von diesem senkrecht nach unten abgehenden vertikalen Schenkel 1052.

Der horizontale Schenkel 1051 wird durch eine rechteckige Platte gebildet, deren Unterseite bei bestimmungsgemäß montierter Photovoltaikanlage wie aus der Figur 1 ersichtlich auf den Photovoltaikmodulen 102, genauer gesagt auf den Rahmen 1021 derselben zu liegen kommt.

Der vertikale Schenkel 1052 geht senkrecht von der Unterseite des horizontalen Schenkels 1051 ab und ist in seinem vom horizontalen Schenkel 1051 abgewandten Bereich gabelförmig ausgebildet. Genauer gesagt ist der vertikale Schenkel 1052 durch einen sich über die gesamte Länge der Klemme 5 ersteckenden vertikalen Schlitz 1053 im vertikalen Schenkel 1052 in zwei identische Hälften unterteilt, die im Folgenden ihrer später noch erläuterten Funktion entsprechend als Rastschenkel 1054, 1055 bezeichnet werden.

An den vom horizontalen Schenkel 1051 abgewandten Enden der Rastschenkel 1054, 1055 sind an den einander zugewandten Seiten derselben jeweils mehrere Rastvertiefungen 1056 und Rasterhebungen 1057 vorgesehen, die komplementär zu den Rasterhebungen 1034 und den Rastvertiefungen 1033 des Verbindungssteges 1032 ausgebildet sind. Der gegenseitige Abstand der Rastschenkel 1054, 1055 ist so bemessen, dass die Rastvertiefungen 1056 und Rasterhebungen 1057 des einen Rastschenkels 1054 und die Rastvertiefungen 1056 und Rasterhebungen 1057 des anderen Rastschenkels 1055 genau so weit voneinander entfernt sind, dass bei bestimmungsgemäßem Zusammenbau von Profilschiene 103 und Klemme 105 die Rasterhebungen 1034 des Verbindungssteges 1032 in den Rastvertiefungen 1056 der Rastschenkel 1054, 1055 zu liegen kommen, und die Rasterhebungen 1057 der Rastschenkel 1054, 1055 in den Rastvertiefungen 1033 des Verbindungssteges 1032 zu liegen kommen.

Die Rastschenkel 1054, 1055 sind elastisch ausgebildet. Genauer gesagt sind sie elastisch auseinander drückbar und ermöglichen es damit, dass die Klemme 105 von oben auf die Profilschiene 103 aufgesteckt wird, genauer gesagt dass der geschlitzte vertikale Schenkel 1052 der Klemme 105 auf den Verbindungssteg 1032 der Profilschiene 3 aufgesteckt wird. Im bestimmungsgemäß zusammengesteckten Zustand kommt der Verbindungssteg 1032 zwischen den Rastschenkeln 1054 zu liegen, und sind der Verbindungssteg 1032 und die Rastschenkel 1054, 1055 über die daran vorgesehenen Rastvertiefungen und Rasterhebungen aneinander verrastet bzw. über eine federnde Verzahnung aneinander befestigt.

Da die Rastverbindung zwischen der Profilschiene 103 und der Klemme 105 eine sehr feste Verbindung sein muss, die sich nicht unbeabsichtigt lösen darf, ist zum bestimmungsgemäßen Aufsetzen der Klemme 105 auf den Verbindungssteg 1032 der Profilschiene 103 eine erhebliche Kraft erforderlich.

Deshalb erfolgt dies vorzugsweise unter Verwendung eines Werkzeuges. Genauer gesagt wird die Klemme 105 meistens durch einen Hammer auf die Profilschiene 103 aufgeschlagen. Dabei kann es jedoch insbesondere aufgrund von Fehlschlägen und der unvermeidlichen Erschütterungen zu Beschädigungen der Photovoltaikmodule kommen.

Durch ein manuelles Aufdrücken der Klemme 105 auf die Profilschiene 103 ließe sich die Gefahr von Beschädigungen zwar verringern, doch erfordert dies eine nicht von jedermann aufbringbare Kraft.

Der vorliegenden Erfindung liegt daher die Aufgabe zugrunde, eine Möglichkeit zu finden, durch welche Photovoltaikmodule und sonstige Gegenstände einfach, schnell, und schonend unter Verwendung einer auf eine Profilschiene aufzudrückenden und mit dieser verrastenden Klemme an einer den Gegenstand tragenden Anordnung befestigbar sind.

Diese Aufgabe wird erfindungsgemäß durch das in Patentanspruch 1 beanspruchte Werkzeug gelöst.

Das erfindungsgemäße Werkzeug zeichnet sich dadurch aus, dass es
- eine Verbindungsvorrichtung, mittels welcher das Werkzeug während dessen Benutzung an der Profilschiene fixierbar ist, und
- eine Klemmenbewegungsvorrichtung, durch welche die Klemme auf den bestimmten Profilschienenabschnitt drückbar ist, aufweist.

Durch die Fixierbarkeit des Werkzeuges an der Profilschiene entfällt die Notwendigkeit, die Klemme mittels eines Schlagwerkzeuges wie eines Hammers auszuschlagen. Vielmehr kann durch die Klemmenbewegungsvorrichtung des erfindungsgemäßen Werkzeuges Kraft auf die Klemme ausgeübt werden, die erstens immer nur allein auf die Klemme wirkt, und die zweitens zeitlich ungefähr konstant sein kann, sodass die Klemme also kontinuierlich und sanft bestimmungsgemäß weit auf die Profilschiene gedrückt werden kann.

Vorteilhafte Weiterbildungen der Erfindung sind den Unteransprüchen, der folgenden Beschreibung, und den Figuren entnehmbar.

Die Erfindung wird nachfolgend anhand eines Ausführungsbeispiels unter Bezugnahme auf die Figuren näher erläutert. Es zeigen
- Figur 1: eine perspektivische Ansicht einer bekannten Anordnung, bei welcher ein Photovoltaikmodul unter Verwendung einer auf eine Profilschiene aufgedrückten und mit dieser verrasteten Klemme an der Profilschiene fixiert ist,
- Figur 2: eine Seitenansicht der in der Anordnung gemäß Figur 1 verwendeten Profilschiene mit zwei darauf aufgelegten Photovoltaikmodulen,
- Figur 3: eine Seitenansicht der in der Anordnung gemäß Figur 1 verwendeten Klemme,
- Figur 4: eine von schräg oben gesehene perspektivische Explosionsdarstellung des hier vorgestellten Werkzeuges,
- Figur 5: eine von schräg unten gesehene perspektivische Explosionsdarstellung des hier vorgestellten Werkzeuges,

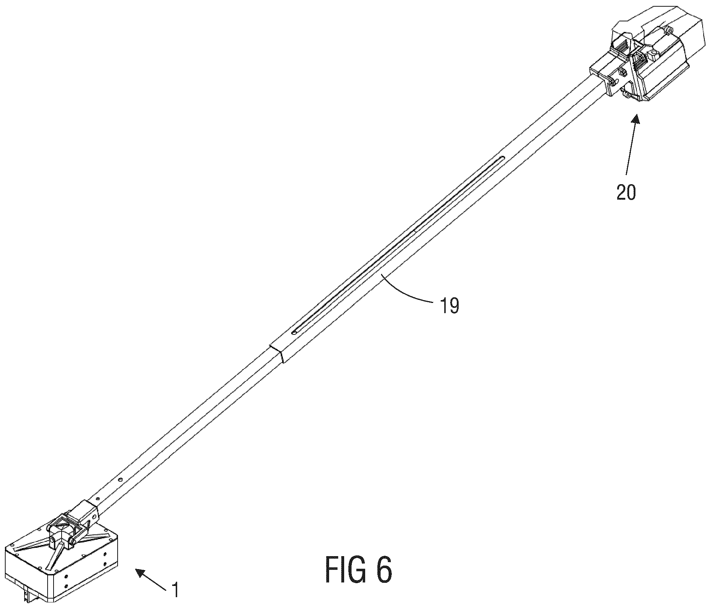

- Figur 6: das zusammengebaute Werkzeug gemäß den Figuren 4 und 5 mit einer Teleskopstange,
- Figur 7: eine Schnittdarstellung des zusammengebauten Werkzeuges,
- Figur 8: eine Schnittdarstellung des zusammengebauten Werkzeuges entlang der in der Figur 7 eingezeichneten Linie A-A,

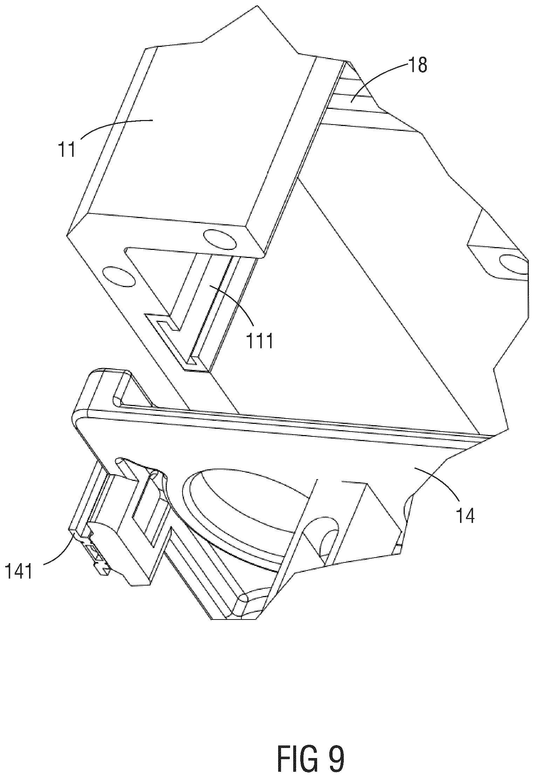

- Figur 9: eine perspektivische Darstellung zur Erläuterung der Verschiebbarkeit einer Druckplatte innerhalb des Werzeuggehäuses,
- Figur 10A: eine Ansicht des Werkzeuges von unten im Ruhezustand, und
- Figur 10B: eine Ansicht des Werkzeuges von unten in einem eine Klemme niederdrückenden Zustand

Das im Folgenden näher beschriebene Werkzeug ist ein Werkzeug zur Fixierung eines Photovoltaikmoduls an einem dieses tragenden Montagesystem unter Verwendung einer auf einen bestimmten Profilschienenabschnitt aufzusetzenden und dabei mit diesem verrastenden Klemme.

Im betrachteten Beispiel dient das Werkzeug zur Anbringung von Photovoltaikmodulen auf das in der DE 20 2020 104 452 U1 offenbarte Montagesystem.

Die durch das Werkzeug am Montagesystem anzubringenden Photovoltaikmodule sind die allgemein bekannten plattenförmigen Gebilde, durch welche einfallendes Licht in elektrische Energie umgewandelt wird. Die vorliegend betrachteten Photovoltaikmodule weisen einen in den Figuren 1 bis 3 mit dem Bezugszeichen 1021 bezeichneten umlaufenden Rahmen auf, sind also gerahmte Photovoltaikmodule. Der Rahmen besteht im betrachteten Beispiel aus Aluminium, könnte aber auch aus einem anderen Material bestehen. Die Rahmenhöhe beträgt vorliegend 30 - 50 mm, könnte prinzipiell aber auch größer oder kleiner sein.

Das Montagesystem wird betrachteten Beispiel im Wesentlichen durch die in den Figuren 1 bis 3 mit dem Bezugszeichen 103 bezeichneten und in der DE 20 2020 104 452 U1 näher beschriebenen Profilschienen gebildet.

Es sei jedoch bereits an dieser Stelle darauf hingewiesen, dass hierauf keine Einschränkung besteht. Das Werkzeug lässt sich zumindest nach entsprechender Anpassung an die gegebenen Verhältnisse auch für die Anbringung von Photovoltaikmodulen auf anderen Montagesystemen einsetzen, bei welchen die Photovoltaikmodule unter Verwendung einer auf einen bestimmten Profilschienenabschnitt aufzusetzenden und dabei mit diesem verrastenden Klemme an der sie tragenden Anordnung fixiert werden. Grundsätzlich sind weder der prinzipielle Aufbau des gesamten Montagesystems, noch die Ausbildung und Anordnung der einzelnen Montagesystem-Komponenten (einschließlich der Ausbildung und Anordnung der Profilschienen und der Klemmen), noch der Untergrund, für welchen das Montagesystem bestimmt ist, noch die Montage des Montagesystems auf dem Untergrund irgendwelchen Einschränkungen unterworfen.

Und unabhängig hiervon lassen sich durch das Werkzeug zumindest nach entsprechender Anpassung an die gegebenen Verhältnisse auch andere Gegenstände an den Montagesystemen oder sonstigen sie tragenden anderen Anordnungen fixieren.

Das hier vorgestellte Werkzeug ist also zumindest nach entsprechender Anpassung an die gegebenen Verhältnisse zur Fixierung eines beliebigen Gegenstandes an einer beliebigen Anordnung verwendbar.

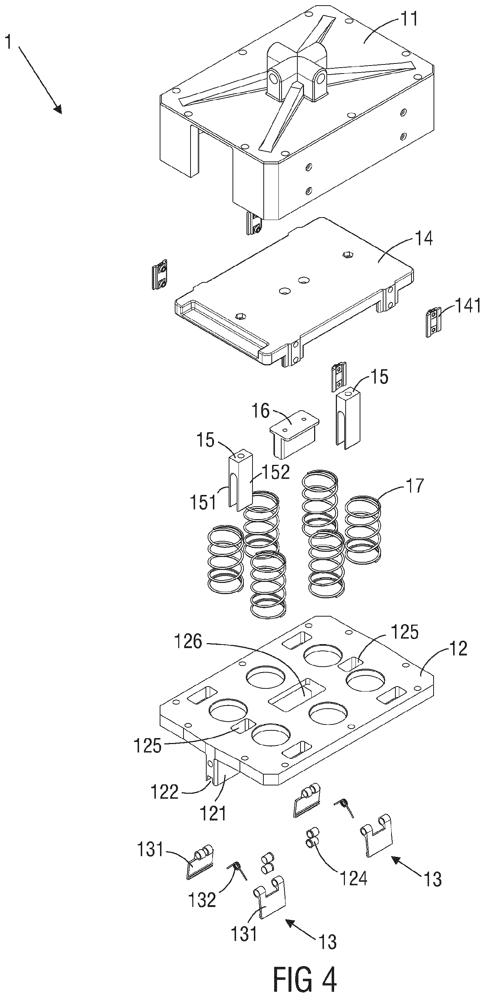

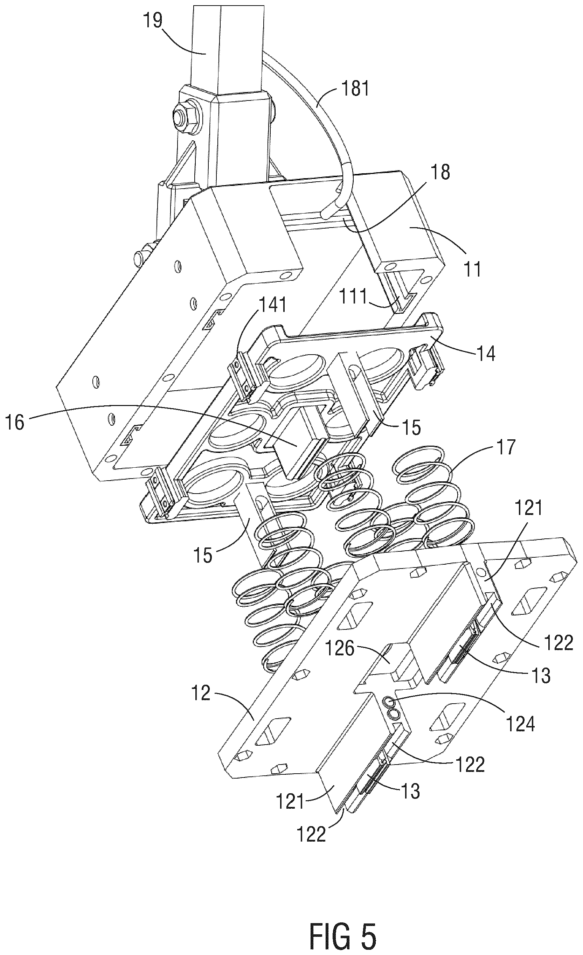

Der Aufbau des beschriebenen Werkzeuges ist insbesondere den in den Figuren 4 und 5 gezeigten Explosionsdarstellungen entnehmbar.

Das Werkzeug 1 weist ein aus einem Gehäuseoberteil 11 und einen daran befestigten Gehäuseboden 12 umfassendes, im Wesentlichen quaderförmiges Gehäuse auf. Von der Unterseite des Gehäusebodens 12 gehen zwei mit Abstand nebeneinander liegende Erhebungen 121 nach unten ab. An den vom Gehäuseboden 12 abgewandten Stirnseiten der zwei Erhebungen 121 ist jeweils eine sich über die gesamte Stirnseite erstreckende nutenförmige Vertiefung 122 vorgesehen, wobei die Vertiefungen 122 der beiden Erhebungen 121 miteinander fluchten und so ausgebildet sind, dass darin das obere Ende des Profilschienenabschnittes, auf welchen die durch das Werkzeug aufzusetzende Klemme 105 aufzusetzen ist, zu liegen kommen kann. Die Vertiefungen 122 erleichtern die bestimmungsgemäße Positionierung des Werkzeuges in Bezug zur Profilschiene 103. Setzt man das Werkzeug so auf die Profilschiene auf, dass sich das obere Ende des Profilschienenabschnittes 1032, auf welchen die durch das Werkzeug aufzusetzende Klemme 105 aufzusetzen ist, in den Vertiefungen 122 befindet, ist das Werkzeug automatisch richtig positioniert.

Zwischen den Erhebungen 121 ist ein Klemmenträger 123 vorgesehen, der dazu ausgelegt ist, die durch das Werkzeug auf die Profilschiene zu drückende Klemme 105 bis zum Aufdrücken der Klemme auf die Profilschiene 103 zu tragen. Der Klemmenträger 123 weist eine die Klemme außen an der Gehäusebodenunterseite haltende Haltevorrichtung auf, wobei die Haltevorrichtung im betrachteten Beispiel ein oder mehrere Druckstücke 124 aufweist, deren vordere Enden
- durch Federn aus dem die Druckstücke tragenden Werkzeugabschnitt heraus drückbar sind, und
- durch die Druckstücke passierende Klemmenabschnitte in den die Druckstücke tragenden Werkzeugabschnitt hinein drückbar sind,
wobei die Druckstücke so angeordnet und ausgebildet sind,
- dass bestimmte Klemmenabschnitte beim Einsetzen der Klemme in den Klemmenträger und beim Verlassen des Klemmenträgers die Druckstücke passieren, und die Druckstücke dabei zur Seite in den die Druckstücke tragenden Werkzeugabschnitt hinein gedrückt werden, und
- dass im bestimmungsgemäß in den Klemmenträger eingesetzten Zustand der Klemme die vorderen Enden der Drückstücke aus dem die Druckstücke tragenden Werkzeugabschnitt herausragen und einem Herausfallen der Klemme aus dem Klemmenträger im Wege stehen.

Im betrachteten Beispiel werden die Druckstücke 124 durch Kugeln oder Stifte gebildet, die zusammen mit den zugeordneten Federn in entsprechenden Aussparungen in den einander zugewandten Seiten der Erhebungen 121 vorgesehen sind. Im betrachteten Beispiel sind in jeder Erhebung je zwei übereinander angeordnete Druckstücke vorgesehen.

Die Klemme 105 wird von unten her mit ihrem horizontalen Schenkel 1051 voraus in den Klemmenhalter 123 eingeschoben. Da der Abstand zwischen den Erhebungen 121 der Länge der Klemme entspricht, werden dabei die Druckstücke 124 durch die Klemme zur Seite, also in die Erhebungen 121 hinein gedrückt. Wenn die Klemme 105 an der Unterseite des Gehäusebodens 12 anschlägt und damit ihre bestimmungsgemäße Position erreicht, haben die die Druckstücke 124 zur Seite drückenden Klemmenabschnitte die Druckstücke passiert, sodass die Druckstücke durch die zugeordneten Federn wieder aus den Erhebungen 121 herausgedrückt werden. Die Druckstücke sind so angeordnet, dass sie hierbei zwischen den Rastschenkeln 1054 und 1055 des vertikalen Klemmenschenkels 1052, also in dem zwischen den Rastschenkeln 1054 und 1055 vorhandenen Schlitz 1053 zu liegen kommen. Vorzugsweise kommen die oberen Druckstücke am oberen Ende des Schlitzes 1053 zu liegen. Damit verhindern die Druckstifte, dass sich die Klemme selbständig vom Werkzeug lösen kann.

Das Werkzeug weist ferner eine Verbindungsvorrichtung auf, mittels welcher das Werkzeug während dessen Benutzung, genauer gesagt während des Aufdrückens der Klemme 103 auf die profilschiene 105 an der Profilschiene fixierbar ist. Die Verbindungsvorrichtung umfasst im betrachteten Beispiel mindestens eine an der Werkzeugunterseite vorgesehene, mit der Profilschiene 103 verbindbare Klammer 13. Vorliegend sind zwei Klammern 13 vorgesehen. Wie insbesondere aus der Figur 4 ersichtlich ist, umfasst jede der Klammern 13 zwei oben gelenkig miteinander verbundene Schenkel 131 und eine die unteren Schenkelabschnitte auseinander drückende Feder 132. Jede der Klammern ist dazu ausgelegt, durch ein Zusammendrücken der unteren Schenkelabschnitte an einem zwischen den Schenkeln 131 liegenden Profilschienenabschnitt fixiert zu werden. Die unteren Klammerschenkelbereiche sind vorzugsweise zumindest teilweise komplementär zu dem dazwischen liegenden Profilschienenabschnitt ausgebildet, sodass zwischen den Klammern 13 und der Profilschiene eine formschlüssige Verbindung entsteht.

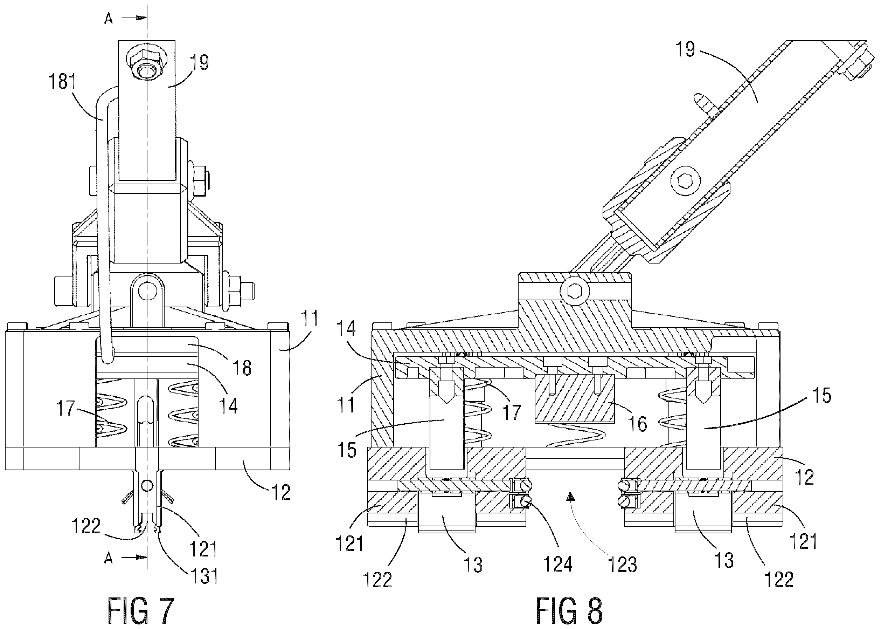

Wie insbesondere aus den Figuren 5, 8 und 10A ersichtlich ist, sind die Klammern 13 in entsprechenden Aussparungen in den Erhebungen 121 des Gehäusebodens 12 untergebracht, und zwar derart, dass die unteren Enden der Klammerschenkel 131 nach unten aus den Erhebungen 121 herausstehen. Dadurch wird erreicht, dass bei dem vorstehend bereits beschriebenen bestimmungsgemäßem Aufsetzen des Werkzeuges auf die Profilschiene 13 das obere Ende der Profilschiene automatisch zwischen den beiden Schenkeln einer jeden Klammer 13 zu liegen kommt.

Die Verbindungsvorrichtung umfasst ferner eine der Anzahl von Klammern 13 entsprechende Anzahl von Gabeln 15 mit jeweils zwei einander parallel gegenüberliegenden Beinen 151, 152, wobei die Gabeln dazu ausgelegt sind, so von oben über die Klammern geschoben zu werden, dass die unteren Schenkelabschnitte der Klammer durch die Gabelbeine zusammen und gegen den zwischen den Klammerschenkeln liegenden Profilschienenabschnitt gedrückt werden.

Genauer gesagt ist es so, dass beim Aufschieben der Gabeln 15 über die Klammern 13 die Innenseite des einen Gabelbeins 151 an der Außenseite des einen Klammerschenkels 131 entlang nach unten gleitet, und die Innenseite des anderen Gabelbeins 152 an der Außenseite des anderen Klammerschenkels 131 entlang nach unten gleitet, und dabei die zunächst durch die Feder 132 auseinander gedrückten Klammerschenkel 131 zueinander hin bewegt.

Die Gabel 15 ist innerhalb des Werkzeuggehäuses vorgesehen und kann über eine im Gehäuseboden 12 vorgesehene, oberhalb der Klammer 13 befindliche Öffnung 125 zumindest teilweise aus dem Werkzeuggehäuse hinaus bewegt und dabei wie beschrieben über die Klammer geschoben werden.

Wie später noch genauer erläutert wird, ist das Werkzeug so ausgebildet, dass automatisch noch vor der eigentlichen Benutzung des Werkzeuges, nämlich noch vor dem Aufdrücken der Klemme 105 auf die Profilschiene 103 das Werkzeug durch die soeben beschriebene Verbindungsvorrichtung am der Profilschiene fixiert wird.

Zum Aufdrücken der Klemme 105 auf die Profilschiene 103 enthält das Werkzeug ferner eine Klemmenbewegungsvorrichtung, durch welche die zunächst noch an der Werkzeugunterseite gehaltene Klemme auf die Profilschiene drückbar ist. Diese Klemmenbewegungsvorrichtung wird im betrachteten Beispiel durch einen von oben auf den horizontalen Schenkel 1051 der Klemme 105 drückbaren und die Klemme dadurch vorbei an den Druckstücken 124 nach unten auf die Profilschiene zu drückenden Druckstempel 16 gebildet.

Der Druckstempel 16 ist innerhalb des Werkzeuggehäuses vorgesehen und kann über eine im Gehäuseboden 12 vorgesehene, oberhalb der Klemme 105 befindliche Öffnung 126 zumindest teilweise aus dem Werkzeuggehäuse hinaus bewegt und dabei wie beschrieben die Klemme 105 nach unten auf die Profilschiene drücken.

Zum Betätigen der Verbindungsvorrichtung und der Klemmenbewegungsvorrichtung weist das Werkzeug ferner eine Antriebsvorrichtung auf, durch welche die Gabeln 15 und der Druckstempel 16 auf- und abbewegbar sind.

Diese Antriebsvorrichtung umfasst eine innerhalb des Werkzeuggehäuses befindliche Druckplatte 14, die innerhalb des Gehäuses auf- und abbewegbar ist, und an deren Unterseite zumindest Teile der Verbindungsvorrichtung und der Klemmenbewegungsvorrichtung angebracht sind. Im betrachteten Beispiel sind dort die Gabeln 15 und der Druckstempel 16 angebracht. Genauer gesagt sind die Gabeln 15 und der Druckstempel 16 so angeordnet, dass sie bei einer Abbewegung der Druckplatte 14 auf die ihnen zugeordneten Öffnungen 125, 126 im Gehäuseboden 12 treffen und durch diese hindurch weiter nach unten gelangen und schließlich auf die Klammern 13 und die Klemme 105 treffen können.

Die Druckplatte 14 ist parallel zur Gehäuseoberseite und zur Gehäuseunterseite angeordnet und wird entlang von an der Gehäuseinnenseite vorgesehenen vertikalen Schienen 111 geführt. An den Schienen 111 gegenüberliegenden Stellen der Druckplatte sind komplementär zu den Schienen 111 ausgebildete und in den Schienen laufende Gegenstücke 141 angebracht.

Die Antriebsvorrichtung umfasst ferner eine erste Druckplatten-Bewegungsvorrichtung, durch welche die Druckplatte 14 nach unten bewegbar ist.

Im betrachteten Beispiel wird diese erste Druckplatten-Bewegungsvorrichtung durch ein innerhalb des Werkzeuggehäuses befindliches, zwischen der oberen Gehäusewand und der Druckplatte 12 angeordnetes aufblasbares Montagekissen 18 gebildet. Genauer gesagt ist die Oberseite des Montagekissens 18 an der Unterseite der oberen Gehäusewand angebracht. Seitlich am Montagekissen 18 ist ein Schlauch 181 anbringbar, über welchen das Montagekissen aufblasbar und entlüftbar ist. Ein Aufblasen des Montagekissens 18 bewirkt, dass sich dieses ausdehnt und dadurch auf die Druckplatte 14 eine nach unten wirkende Kraft erzeugt. Ein Entlüften des Montagekissens 18 hat den Wegfall dieser Kraft zur Folge.

Die Antriebsvorrichtung umfasst ferner eine zweite Druckplatten-Bewegungsvorrichtung, durch welche die Druckplatte 14 nach oben bewegbar ist.

Im betrachteten Beispiel wird diese zweite Druckplatten-Bewegungsvorrichtung durch mindestens eine innerhalb des Gehäuses befindliche, zwischen dem Gehäuseboden 12 und der Druckplatte 14 angeordnete Druckfeder 17 gebildet. Vorliegend handelt es sich um 6 gleichmäßig verteilte Spiralfedern. Durch diese wird auf die Druckplatte 14 eine nach oben wirkende Kraft erzeugt, durch welche die Druckplatte 14 bis zur Unterseite des Montagekissens 18 nach oben gedrückt wird.

Die durch das Montagekissen 18 erzeugte Kraft ist größer als die durch die Druckfedern 17 erzeugte Kraft. Die Position der Druckplatte 14 innerhalb des Werkzeuggehäuses hängt somit also im Wesentlichen allein davon ab, wie stark das Montagekissen 18 aufgeblasen ist. Die Druckfedern 17 erzeugen lediglich eine Kraft, die die Druckplatte 14 beim Entlüften des Montagekissens 18 nach oben schiebt.

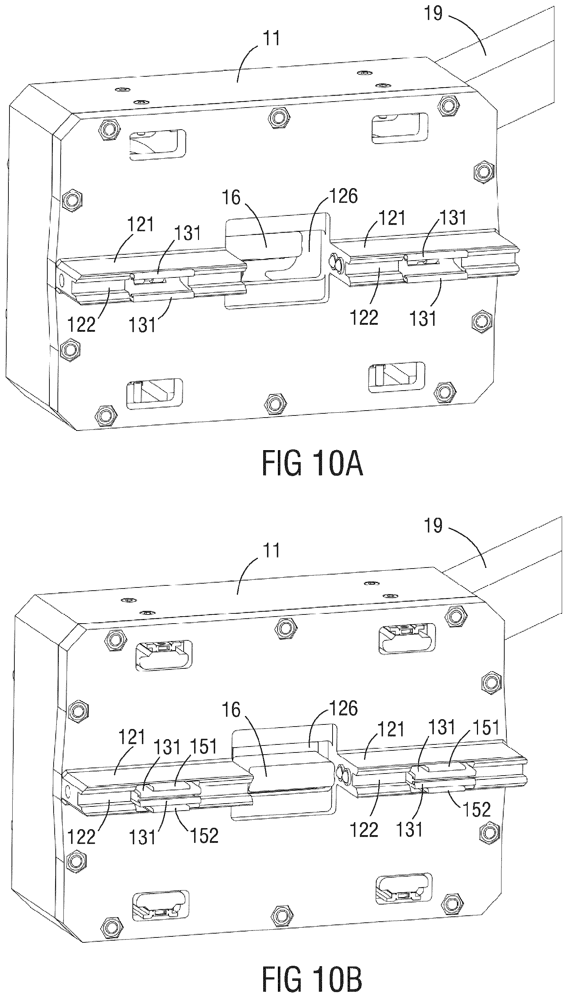

In den Figuren 10A und 10B ist veranschaulicht, was eine Bewegung der Druckplatte 14 bewirkt. Die Figur 10A zeigt den Zustand, in welchem sich die Druckplatte 14 weit oben befindet. In diesem Zustand haben die Gabeln 15 die Klammern 13 noch nicht erreicht, und die unteren Enden der Klammerschenkel 131 sind durch die Feder 132 noch maximal weit auseinandergedrückt. Und der Druckschenkel 16 ist noch weit entfernt von der Öffnung 126 im Gehäuseboden 12, durch welche er hindurch gelangen muss, um die Klemme 105 nach unten auf die Profilschiene zu drücken. Die Figur 10B zeigt den Zustand, in welchem die Druckplatte 14 durch das Montagekissen 18 weiter nach unten geschoben ist. In diesem Zustand sind die Gabeln 15 vollständig über die Klammern 13 geschoben, und sind die Klammerschenkel 131 durch die Gabeln maximal weit zusammengedrückt. Das heißt, das Werkzeug ist durch die Klammern 13 bereits fest an der Profilleiste 103 fixiert. Und der die Klemme 105 niederdrückende Druckstempel 16 ragt bereits nach unten aus der zugeordneten Öffnung 126 im Gehäuseboden 12 heraus, sodass zumindest damit begonnen wurde, die Klemme 105 auf die Profischiene 103 zu drücken.

Die Antriebsvorrichtung umfasst ferner einen vorzugsweise ackubetriebenen Kompressor zum Aufblasen des Montagekissens 18 und ein Entlüftungsventil zum Entlüften des Montagekissens 18. Diese beiden Antriebsvorrichtungskomponenten sind im betrachteten Beispiel außerhalb des Werkzeuggehäuses vorgesehen und über den bereits erwähnten Schlauch 181 mit dem Montagekissen 18 verbunden. Genauer gesagt sind sie an einer gelenkig mit der Oberseite des Gehäuseoberteils 11 verbundenen Teleskopstange 19 angebracht.

Die Teleskopstange 19 ermöglicht es, das Werkzeug aus der Ferne an der gewünschten Stelle auf die Profilschiene 103 aufzusetzen und zu bedienen. Der Kompressor, das Entlüftungsventil und benötigte Bedienelemente sind zu einer Bedieneinheit 20 zusammengefasst, welche im betrachteten Beispiel an dem vom Werkzeuggehäuse abgewandten Ende der Teleskopstange 19 angebracht ist.

Die Benutzung des Werkzeuges beginnt mit dem vorstehend bereits erläuterten Aufsetzen desselben auf die Profilschiene, wobei dies mit Hilfe der Teleskopstange auch aus der Ferne erfolgen kann. Anschließend wird der Kompressor eingeschaltet. Dies bewirkt, dass sich das Montagekissen 18 mit Luft füllt und sich entsprechend ausdehnt. Hierdurch wird die durch die Druckfedern 17 vorgespannte Druckplatte 14 zusammen mit den daran angebrachten Gabeln 15 und dem Druckstempel 16 nach unten geschoben. Aufgrund der unterschiedlichen Längen der Gabeln 15 und des Druckstempels 16 kommen die Gabeln zuerst in ihrem Wirkbereich an. Genauer gesagt gleiten die Gabeln 15 an der Außenkontur der Klammerschenkel 131 entlang, und schließen diese dadurch so weit, bis ein Formschluss mit der Profilschiene entstanden ist. Als Nächstes trifft der Druckstempel 16 auf die im Werkzeug eingelegte Klemme und drückt diese auf die Profilschiene 103 auf. Die benötigte Gegenkraft wird über die formschlüssig mit der Profilschiene verbundenen Klammern 13 in das Werkzeug 1 eingeleitet, was ein Abstoßen des Werkzeugs von der Profilschiene verhindert. Nachdem die Klemme 105 bestimmungsgemäß weit auf die Profilschiene aufgebracht wurde, wird der mit Hilfe des Entlüftungsventils Luft aus dem Montagekissen 18 abgelassen. Dadurch wird die Druckplatte 14 durch die Druckfedern 17 wieder in ihre ursprüngliche Ausgangslage zurückgeschoben. Dabei lösen sich die Klammern 13 von der Profilschiene 103 und lassen das Werkzeug wieder von der Profilschiene abnehmen.

Es dürfte einleuchten und bedarf keiner näheren Erläuterung, dass das vorstehend beschriebene Werkzeug mannigfaltig modifizierbar ist. Die Anzahl, die Ausbildung, und die Anordnung der vorstehend beschriebenen Werkzeugkomponenten kann insbesondere in Abhängigkeit von den individuellen Einsatzbedingungen beliebig geändert werden. Selbstverständlich können zusätzlich oder alternativ zu den beschriebenen Werkzeugkomponenten auch andere Werkzeugkomponenten zum Einsatz kommen.

Das vorstehend beschriebene Werkzeug erweist sich unabhängig von den Einzelheiten der praktischen Realisierung als vorteilhaft. Durch dieses lassen sich Photovoltaikmodule und sonstige Gegenstände einfach, schnell, und schonend unter Verwendung einer auf eine Profilschiene aufzudrückenden und mit dieser verrastenden Klemme an einer den Gegenstand tragenden Anordnung befestigen.

### Bezugszeichenliste

- 1: Werkzeug
- 11: Gehäuseoberteil
- 12: Gehäuseboden
- 13: Klammer zur Fixierung von 1 an 103
- 14: Druckplatte zur Bewegung von 15 und 16
- 15: 131 zusammendrückende Gabel
- 16: Druckstempel zum Niederdrücken von 105
- 18: aufblasbares Montagekissen
- 19: mit 11 verbundene Teleskopstange
- 20: Bedieneinheit für 1

- 111: vertikale Schienen in 11 zur Führung von 14

- 121: Erhebungen an Unterseite von 12
- 122: nutenförmige Vertiefung in Stirnseite von 121
- 123: Klemmenträger
- 124: Druckstück
- 125: Öffnung in 12 für 15

- 131: Schenkel von 13
- 132: 131 auseinander drückende Feder

- 141: komplementär zu 111 ausgebildete und in 111 laufende Gegenstücke an 14

- 151: erstes Bein von 15
- 152: zweites Bein von 15

- 181: Schlauch zum Aufblasen und Entlüften von 18

- 101: Dach
- 102: Photovoltaikmodul
- 103: Profilschiene
- 105: Klemme
- 1021: Rahmen von 102
- 1031: Auflage für 1021 an 103
- 1032: mit 105 verrastbarer vertikaler Verbindungssteg an 103
- 1033: Rastvertiefungen in 1032
- 1034: Rasterhebungen an 1032

- 1051: horizontaler Schenkel von 105
- 1052: vertikaler Schenkel von 105

- 1053: vertikaler Schlitz in 1052
- 1054: erster Rastschenkel
- 1055: zweiter Rastschenkel
- 1056: Rastvertiefungen an 1054 und 1055
- 1057: Rasterhebungen an 1054 und 1055

## Patentansprüche

1. Werkzeug (1) zur Fixierung eines Gegenstandes (102) an einer diesen tragenden Anordnung (103) unter Verwendung einer auf einen bestimmten Profilschienenabschnitt aufzusetzenden und dabei mit diesem verrastenden Klemme (105),
**dadurch gekennzeichnet, dass** das Werkzeug
- eine Verbindungsvorrichtung (13, 15), mittels welcher das Werkzeug während dessen Benutzung an der Profilschiene (103) fixierbar ist, und
- eine Klemmenbewegungsvorrichtung (16), durch welche die Klemme auf den bestimmten Profilschienenabschnitt drückbar ist,
aufweist.

2. Werkzeug nach Anspruch 1, **dadurch gekennzeichnet, dass** das Werkzeug einen an seiner Unterseite vorgesehenen Klemmenträger (123) aufweist, in welchen die durch das Werkzeug auf die Profilschiene (103) zu drückende Klemme (105) einsetzbar ist, und dass der Klemmenträger (123) eine Haltevorrichtung (124) aufweist, durch welche die durch das Werkzeug auf die Profilschiene (103) zu drückende Klemme (105) bis zum Aufdrücken der Klemme auf die Profilschiene am Werkzeug gehalten wird.

3. Werkzeug nach Anspruch 2, **dadurch gekennzeichnet, dass** die Haltevorrichtung ein oder mehrere Druckstücke (124) umfasst, deren vordere Enden
- durch Federn aus dem die Druckstücke aufnehmenden Werkzeugabschnitt heraus drückbar sind, und
- durch die Druckstücke passierende Klemmenabschnitte in den die Druckstücke aufnehmenden Werkzeugabschnitt hinein drückbar sind,
wobei die Druckstücke so angeordnet und ausgebildet sind,
- dass bestimmte Klemmenabschnitte beim Einsetzen der Klemme (105) in den Klemmenträger (123) und beim Verlassen des Klemmenträgers die Druckstücke passieren, und die Druckstücke dabei durch die sie passierenden Klemmenabschnitte zur Seite in den die Druckstücke aufnehmenden Werkzeugabschnitt hinein gedrückt werden, und
- dass im bestimmungsgemäß in den Klemmenträger eingesetzten Zustand der Klemme die vorderen Enden der Drückstücke aus dem Werkzeug herausragen und einem Herausfallen der Klemme aus dem Klemmenträger im Wege stehen.

4. Werkzeug nach einem der vorhergehenden Ansprüche, **dadurch gekennzeichnet, dass** die Verbindungsvorrichtung (13, 15) mindestens eine an der Werkzeugunterseite vorgesehene Klammer (13) umfasst,
- die zwei oben gelenkig miteinander verbundene Schenkel (131) und eine die unteren Schenkelabschnitte auseinander drückende Feder (132) umfasst, und
- die dazu ausgelegt ist, durch ein Zusammendrücken der unteren Schenkelabschnitte an einem zwischen den Schenkeln liegenden Profilschienenabschnitt (103) fixiert zu werden.

5. Werkzeug nach Anspruch 4, **dadurch gekennzeichnet, dass** die Verbindungsvorrichtung (13, 15) ferner eine der Anzahl von Klammern (13) entsprechende Anzahl von Gabeln (15) mit jeweils zwei einander parallel gegenüberliegenden Beinen (151, 151) aufweist, wobei die Gabeln dazu ausgelegt sind, so von oben über die Klammer geschoben zu werden, dass die unteren Schenkelabschnitte der Klammer durch die Gabelbeine zusammen und gegen den zwischen den Klammerschenkeln liegenden Profilschienenabschnitt (103) gedrückt werden.

6. Werkzeug nach einem der vorhergehenden Ansprüche, **dadurch gekennzeichnet, dass** die Klemmenbewegungsvorrichtung (16) durch einen Druckstempel gebildet wird, der dazu auslegt ist die durch das Werkzeug auf die Profilschiene (105) zu drückende, und zunächst noch am Werkzeug gehaltene Klemme (105) nach unten auf die Profilschiene zu drücken.

7. Werkzeug nach einem der vorhergehenden Ansprüche, **dadurch gekennzeichnet, dass** das Werkzeug eine Antriebsvorrichtung (14, 17, 18) zum Betätigen der Verbindungsvorrichtung (13, 15) und der Klemmenbewegungsvorrichtung (16) aufweist.

8. Werkzeug nach Anspruch 7, **dadurch gekennzeichnet, dass** die Antriebsvorrichtung (14, 17, 18) eine innerhalb des Werkzeuggehäuses befindliche Druckplatte (14) umfasst, an deren Unterseite zumindest Teile der Verbindungsvorrichtung (13, 15) und der Klemmenbewegungsvorrichtung (16) angebracht sind, und die innerhalb des Werkzeuggehäuses auf- und abbewegbar ist.

9. Werkzeug nach Anspruch 8, **dadurch gekennzeichnet, dass** im Gehäuseboden (12) Öffnungen (125, 126) vorgesehen sind, durch welche die an der Unterseite der Druckplatte angebrachten Teile der Verbindungsvorrichtung (13, 15) und der Klemmenbewegungsvorrichtung (16) in dem für die bestimmungsgemäße Werkzeugbenutzung erforderlichen Umfang hindurch gelangen können.

10. Werkzeug nach einem der Ansprüche 7 bis 9, **dadurch gekennzeichnet, dass** die Antriebsvorrichtung (14, 17, 18) eine erste Druckplatten-Bewegungsvorrichtung (18) umfasst, durch welche die Druckplatte (14) nach unten bewegbar ist.

11. Werkzeug nach Anspruch 10, **dadurch gekennzeichnet, dass** die erste Druckplatten-Bewegungsvorrichtung (18) durch ein innerhalb des Werkzeuggehäuses befindliches, zwischen der oberen Gehäusewand und der Druckplatte (14) angeordnetes aufblasbares Montagekissen gebildet wird, durch welches auf die Druckplatte eine nach unten wirkende Kraft erzeugbar ist.

12. Werkzeug nach einem der Ansprüche 7 bis 11, **dadurch gekennzeichnet, dass** die Antriebsvorrichtung (14, 17, 18) eine zweite Druckplatten-Bewegungsvorrichtung (17) umfasst, durch welche die Druckplatte (14) nach oben bewegbar ist.

13. Werkzeug nach Anspruch 12, **dadurch gekennzeichnet, dass** die zweite Druckplatten-Bewegungsvorrichtung (17) durch mindestens eine innerhalb des Gehäuses befindliche, zwischen dem Gehäuseboden (12) und der Druckplatte (14) angeordnete Druckfeder (17) gebildet wird, durch welche auf die Druckplatte eine nach oben wirkende Kraft erzeugbar ist,

14. Werkzeug nach einem der vorhergehenden Ansprüche, **dadurch gekennzeichnet, dass** die Verbindungsvorrichtung (13, 15), die Klemmenbewegungsvorrichtung (16), und die Antriebsvorrichtung (14, 17, 18) derart ausgebildet und angeordnet sind, dass im bestimmungsgemäß auf die Profilschiene (103) aufgesetzten Zustand des Werkzeuges ein Aufblasen des Montagekissens (18) zunächst eine Fixierung der Verbindungsvorrichtung an der Profilschiene bewirkt, und erst nach erfolgter Fixierung mit dem Aufdrücken der Klemme (105) auf die Profilschiene begonnen wird.

15. Werkzeug nach einem der vorhergehenden Ansprüche, **dadurch gekennzeichnet, dass** das Werkzeug eine an dessen Gehäuseoberseiteberseite befestigbare Teleskopstange (19) umfasst, mittels welcher das Werkzeug aus der Ferne an der gewünschten Stelle auf die Profilschiene aufsetzbar und bedienbar ist.

16. Werkzeug nach einem der vorhergehenden Ansprüche, **dadurch gekennzeichnet, dass** das Werkzeug einen Kompressor zum Befüllen des Montagekissens (18) mit Luft und ein Entlüftungsventil zum Ablassen von Luft aus dem Montagekissen umfasst, und dass der Kompressor und das Entlüftungsventil an dem vom Werkzeuggehäuse abgewandten Ende der Teleskopstange (19) vorgesehen sind.
